# EUROPÄISCHE PATENTSCHRIFT

(11) **EP 1 053 156 B1**
(45) Veröffentlichungstag und Bekanntmachung des Hinweises auf die Patenterteilung: **30.10.2002**
(21) Anmeldenummer: 99906217.7
(22) Anmeldetag: 04.02.1999
(51) Int. Cl.: B60T 13/72

(54) **BREMSKRAFTVERSTÄRKER UND VERFAHREN ZU SEINER ANSTEUERUNG**
BRAKE POWER BOOSTER AND A METHOD FOR CONTROLLING THE SAME
SERVOFREIN ET SON PROCEDE DE COMMANDE

(30) Priorität: 07.02.1998 DE 19804936; 11.09.1998 DE 19841879
(43) Veröffentlichungstag der Anmeldung: 22.11.2000
(73) Patentinhaber: Continental Teves AG & Co. oHG, 60488 Frankfurt (DE)
(72) Erfinder: DROTT, Peter, D-65936 Frankfurt am Main (DE); VOGT, Michael, D-55469 Simmern (DE); FEIGEL, Hans-Jörg, D-61191 Rosbach (DE); GONZALEZ, Jose, D-65510 Idstein (DE); KRÄMER, Horst, D-63128 Dietzenbach (DE); NEU, Thorsten, D-35792 Lohnberg (DE)
(86) Internationale Anmeldenummer: EP9900721
(87) Internationale Veröffentlichungsnummer: WO99039958

(56) Entgegenhaltungen:
- DE-A- 4 324 688
- DE-A- 19 519 874

## Beschreibung

Die Erfindung betrifft einen Bremskraftverstärker für Kraftfahrzeuge mit einem Verstärkergehäuse, dessen Innenraum durch eine bewegliche Wand in eine Unterdruckkammer und eine Arbeitskammer unterteilt ist, sowie mit einem die bewegliche Wand tragenden Steuergehäuse, in dem ein sowohl durch eine Betätigungsstange mittels eines Ventilkolbens als auch durch einen Elektromagneten betätigbares Steuerventil zur Steuerung einer auf die bewegliche Wand einwirkenden Druckdifferenz angeordnet ist.

Ein derartiger Bremskraftverstärker ist z.B. in der internationalen Patentanmeldung WO 94/11226 offenbart. Bei diesem bekannten Bremskraftverstärker kann die Arbeitskammer unabhängig von der Stellung des Bremspedals bzw. der mit diesem verbundenen Betätigungsstange durch Aktivierung des Elektromagneten belüftet werden. Durch eine entsprechende Ansteuerung des Elektromagneten kann ein sogenannter "Bremsassistent" realisiert werden, der im Falle einer Notbremsung auch dann eine volle Verstärkungskraft zur Verfügung stellt, wenn der Fahrer das Bremspedal nicht mit der zum Ansprechen einer ABS-Regelung erforderlichen Fußkraft betätigt. Hierzu wird z.B. über einen Pedalwegsensor mit nachgeschalteter Signaldifferenzierung die Geschwindigkeit der Bremspedalbetätigung erfaßt. Sobald die Betätigungsgeschwindigkeit des Bremspedals einen vorbestimmten Wert übersteigt, wird durch Aktivierung des Elektromagneten eine Bremsung mit voller Verstärkung eingeleitet. Zur Deaktivierung des Bremsassistenten ist in den herkömmlichen Bremskraftverstärker ein gesonderter Löseschalter integriert. Dieser schaltet den Bremsassistenten ab, sobald der Fahrer das Bremspedal zurücknimmt. Ein derartiges Konzept erfordert allerdings durch den Pedalwegsensor mit entsprechender Signaldifferenzierung und durch den zusätzlichen Löseschalter mit der zugehörigen Auslösemechanik einen relativ hohen konstruktiven und schaltungstechnischen Aufwand.

Aufgabe der Erfindung ist es, einen konstruktiv vereinfachten und elektrisch einfach ansteuerbaren Bremskraftverstärker mit elektrischer Fremdbetätigung und ein Verfahren zu dessen Ansteuerung zu schaffen.

Diese Aufgabe wird durch einen Bremskraftverstärker mit den Merkmalen des Anspruchs 1 bzw. durch ein Verfahren mit den Merkmalen des Anspruchs 13 gelöst. Vorteilhafte Ausgestaltungen sind in den Unteransprüchen angegeben.

Ein Bremskraftverstärker der eingangs genannten Art ist erfindungsgemäß dadurch gekennzeichnet, daß ein Sensor vorhanden ist, der die Relativverschiebung zwischen dem Ventilkolben und dem Steuergehäuse erfaßt und in Abhängigkeit davon der Elektromagnet aktiviert und gesteuert wird.

Der erfindungsgemäße Bremskraftverstärker bietet die Möglichkeit einer sehr einfachen Steuerung der Bremsassistentenfunktion, da die Signale des Sensors sowohl zur Aktivierung als auch zur Deaktivierung des Elektromagneten verwendet werden können. Dies bedeutet, daß eine Bremsassistentenfunktion lediglich auf der Grundlage der Signale eines einzigen Sensors ausgelöst und auch beendet werden kann. Zur Auslösung des Bremsassistenten ist im Gegensatz zu herkömmlichen Ausführungen kein Pedalwegsensor mit aufwendiger Signaldifferenzierung erforderlich. Die Aktivierung des Elektromagneten kann bei Überschreiten einer vorgegebenen ersten Relativverschiebung zwischen dem Ventilgehäuse und dem Steuergehäuse erfolgen, die durch einen entsprechend ausgebildeten Sensor auf einfache weise erfaßt werden kann. Auch die Beendigung der Bremsassistentenfunktion kann auf der Grundlage der Sensorsignale erfolgen, indem z.B. der Elektromagnet bei Unterschreiten einer vorgegebenen zweiten Relativverschiebung abgeschaltet wird. Somit kann auf den bei herkömmlichen elektrisch unterstützten Bremskraftverstärkern verwendeten Löseschalter mitsamt seiner aufwendigen Betätigungsmechanik verzichtet werden. Dadurch sind Kosteneinsparungen möglich.

Eine zweckmäßige Ausführungsform der Erfindung zeichnet sich dadurch aus, daß der Ansteuerstrom des Elektromagneten im aktivierten Zustand in Abhängigkeit von der durch den Sensor erfaßten Relativverschiebung veränderbar ist. Dadurch wird auch im Bremsassistenten-Modus eine dosierte Steuerung des Bremsdruckes ermöglicht. Der Fahrer ist damit in der Lage, den Bremsdruck durch entsprechende Zurücknahme des Bremspedals dosiert abzubauen, ohne daß die Bremsassistentenfunktion schlagartig unterbrochen wird. Auf diese Weise kann der bei herkömmlichen Bremskraftverstärkern auftretende plötzliche Austritt aus dem Bremsassistenten-Modus optimiert und für den Fahrer weitgehend unbemerkbar gemacht werden.

Die zur Aktivierung des Elektromagneten vorgegebene erste Relativverschiebung kann ein je nach den Anforderungen wählbarer fester Wert sein. Sie kann allerdings auch in Abhängigkeit von der Fahrzeugverzögerung und/oder der Fahrzeuggeschwindigkeit und/oder des Bremsdrucks und/oder der Zeit, die nach dem Zeitpunkt der Pedalbetätigung vergangen ist, veränderbar sein. Dadurch ist eine optimale Anpassung der Bremsassistentenaktivierung an unterschiedliche Fahrsituationen möglich.

Der Sensor zur Erfassung der Relativverschiebung zwischen dem Ventilkolben und dem Steuergehäuse ist zweckmäßigerweise als berührungsloser Sensor ausgebildet. Es kann z.B. ein Hallelement, ein Inkrementalwegaufnehmer, ein Linearpotentiometer oder dgl. sein. In einer konstruktiv günstigen Ausführung ist z.B. ein erstes Sensorelement am einem mit dem Ventilkolben verbundenen Führungsteil und ein zweites Sensorelement an der Innenwand eines mit dem Steuergehäuse fest verbundenen Teils angeordnet. Die Sensorelemente können aber auch an anderen Stellen angebracht sein, an denen eine Relativverschiebung zwischen dem Steuergehäuse und dem Ventilkolben oder anderen zusammen mit dem Steuergehäuse bzw. dem Ventilkolben bewegten Teilen des Bremskraftverstärkers erfaßt werden kann.

Eine besonders einfache und zweckmäßige elektrische Schaltung zur Aktivierung und Deaktivierung des Elektromagneten in Abhängigkeit von den Signalen eines die Relativverschiebung zwischen dem Ventilkolben und der Steuerhülse erfassenden Sensors enthält zwei Komparatoren zur Ansteuerung zweier Relais, die in Reihe zum Elektromagneten geschaltet sind. Der eine Komparator ist auf den einer Abschaltschwelle entsprechenden geringen Wert und der zweite Komparator auf den einer Zuschaltschwelle entsprechenden hohen Wert einer Relativverschiebung eingestellt. In der Bereitschaftsstellung des Bremskraftverstärkers, in welcher die Abschaltschwelle überschritten ist, ist nur der erste Komparator durchgeschaltet. Wird bei einer schnellen Bremsbetätigung die Zuschaltschwelle erreicht, schaltet auch der zweite Komparator durch und der Magnet zur Einschaltung des Bremsassistenten wird aktiviert. Gleichzeitig wird eine Selbsthaltung aktiviert, so daß die Bremsassistentenfunktion erst abgebrochen wird, wenn die Abschaltschwelle erreicht ist. Eine derartige Schaltung benötigt nur eine Versorgungsspannung von z.B. 12 V und kann sogar in die Baueinheit des Bremskraftverstärkers integriert sein.

weitere Besonderheiten und Vorzüge der Erfindung ergeben sich aus der nachfolgenden Beschreibung vorteilhafter Ausführungsformen anhand der Zeichnung.

Es zeigen:
- Fig. 1: eine Teilansicht eines erfindungsgemäßen Bremskraft-verstärkers mit aktiviertem Bremsassistenten im Längsschnitt;
- Fig. 2: ein Diagramm zur Darstellung einer elektrischen Ansteuerung des erfindungsgemäßen Bremskraftverstärkers; und
- Fig. 3: eine elektrische Schaltung zur Ansteuerung des Elektromagneten im erfindungsgemäßen Bremskraftverstärker.

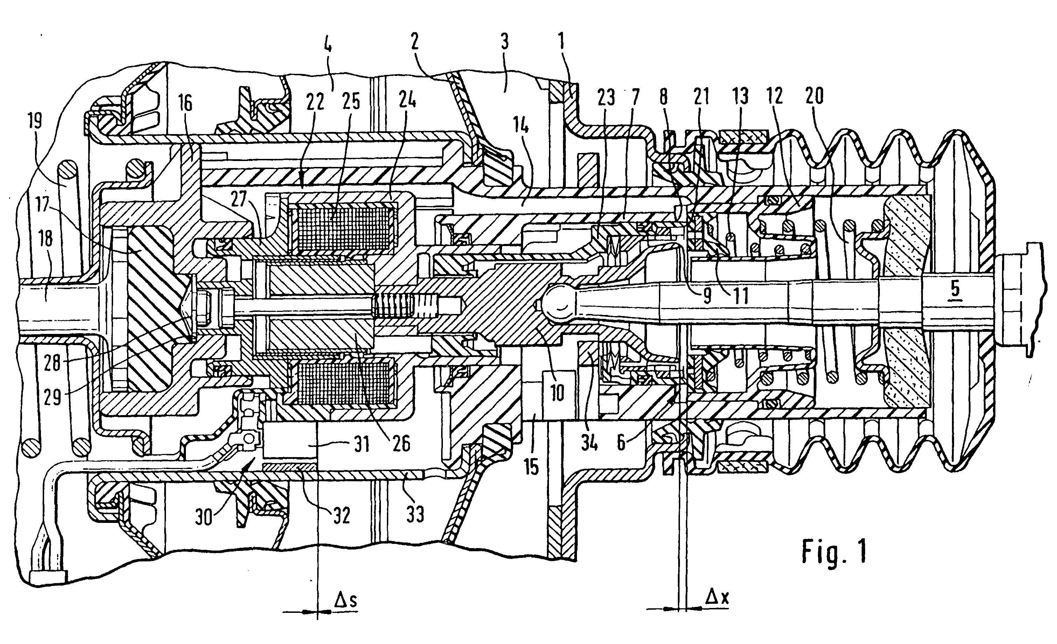

Bei dem in Fig. 1 zum Teil dargestellten Unterdruck-Bremskraftverstärker ist das Verstärkergehäuse 1 durch eine axial bewegliche Wand 2 in eine Arbeitskammer 3 und eine Unterdruckkammer 4 unterteilt. Ein durch eine Betätigungsstange 5 betätigbares Steuerventil 6 ist in einem im Verstärkergehäuse 1 abgedichtet geführten, die bewegliche Wand 2 tragenden Steuergehäuse 7 untergebracht. Das Steuerventil 6 enthält einen ersten Dichtsitz 8 am Steuergehäuse 7, einen zweiten Dichtsitz 9 an einem mit der Betätigungsstange 5 verbundenen ventilkolben 10 sowie einen mit den beiden Dichtsitzen 8,9 zusammenwirkenden ventilkörper 11, der mittels einer sich an einem Haltering 12 abstützenden Ventilfeder 13 gegen die Dichtsitze 8,9 gedrückt wird. Die Arbeitskammer 3 ist mit der Unterdruckkammer 4 über einen seitlich im Steuergehäuse 7 verlaufenden Kanal 14 verbindbar. Um die Arbeitskammer 3 bei der Betätigung des Steuerventils 6 mit der Atmosphäre verbinden zu können, ist schließlich im Steuergehäuse 7 ein radial verlaufender Kanal 15 ausgebildet.

Die Bremskraft wird über eine an einem Vorderteil 16 des Steuergehäuses 7 stirnseitig anliegende gummielastische Reaktionsscheibe 17 und eine Druckstange 18 auf einen Betätigungskolben eines nichtdargestellten Hauptbremszylinders übertragen. Über eine Rückstellfeder 19 wird die bewegliche Wand 2 in ihre Ausgangsstellung gedrückt. Außerdem ist eine zweite Druckfeder 20 vorgesehen, die einerseits an der Betätigungsstange 5 und andererseits an dem Haltering 12 abgestützt ist.

Um eine von der Betätigungsstange 5 unabhängige Fremdbetätigung des Bremskraftverstärkers einzuleiten, ist radial zwischen dem ersten Dichtsitz 8 und dem zweiten Dichtsitz 9 ein dritter Dichtsitz 21 an einer durch einen Elekromagneten 22 verschiebbaren Hülse 23 ausgebildet. Der Elektromagnet 22 besteht aus einer in einem mit dem Steuerkolben 10 verbundenen Führungsteil 24 angeordneten Spule 25 sowie einem darin verschiebbaren Anker 26, der mit der Hülse 23 in kraftübertragender Verbindung steht. An der Vorderseite des Führungsteils 24 ist ein Verschlußteil 27 angeordnet. Zwischen dem Verschlußteil 27 und der Reaktionsscheibe 17 ist eine Übersetzerscheibe 28 begrenzt verschiebbar angeordnet, deren Bewegung entgegen der Betätigungsrichtung durch eine im Vorderteil 16 ausgebildete Ringfläche 29 begrenzt wird.

Ein Bremskraftverstärker mit einem derartigen Aufbau ist ausführlich in der eingangs erwähnten WO 94/11226 beschrieben. Für weitere Einzelheiten wird daher auf diese Druckschrift verwiesen.

Im Gegensatz zu dem bekannten Bremskraftverstärker zeichnet sich der erfindungsgemäße Bremskraftverstärker durch einen Sensor 30 zur Erfassung der Relativverschiebung zwischen dem Steuergehäuse 7 und dem Ventilkolben 10 aus. Bei der in Fig. 1 gezeigten Ausführung ist der Sensor 30 ein berührungsloser Sensor mit einem ersten Sensorelement 31 an dem mit dem Ventilkolben 10 fest verbundenen Führungsteil 24 sowie einem zweiten Sensorelement 32, das dem ersten Sensorelement 28 gegenüberliegend an der Innenwand eines mit dem Steuergehäuse 7 fest verbundenen Teils 33 angeordnet ist. Ein derartiger Sensor ermöglicht eine sehr einfache Steuerung der Bremsassistentenfunktion, da das Signal des Sensors sowohl zum Aktivieren als auch zum Deaktivieren des Elektromagneten und damit des Bremsassistenten verwendet werden kann. Dies bedeutet, daß der Bremsassistenten-Modus lediglich auf der Grundlage von Signalen eines einzigen Sensors ausgelöst und auch beendet werden kann.

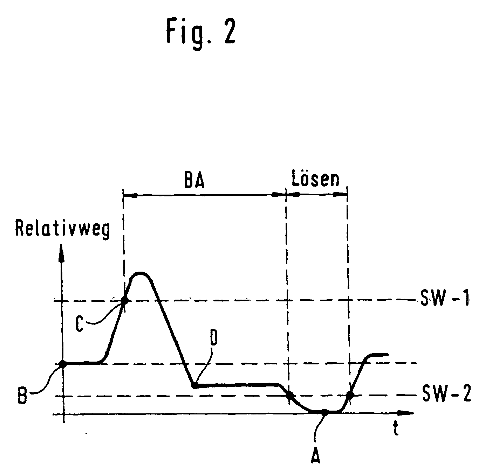

Fig. 2 ist ein Diagramm, das ein Beispiel für die elektrische Ansteuerung des erfindungsgemäßen Bremskraftverstärkers in Abhängigkeit von der durch den Sensor 30 erfaßten Relativverschiebung zeigt. In diesem Diagramm ist mit Punkt A ein Zustand bezeichnet, in dem sich der Ventilkolben 10 in seiner maximal zurückgezogenen Stellung gegenüber dem Steuergehäuse 7 befindet. Dieser Zustand kann erreicht werden, indem der Elektromagnet 22 ohne Fahrerfußeinwirkung bestromt wird. Dadurch wird die Schiebehülse 23 vom Anker 26 gemäß Fig. 1 nach rechts verschoben und drückt mit ihrem Dichtsitz 21 den Ventilkörper 11 nach hinten. Hierdurch kann Luft von außen in die Arbeitskammer 3 einströmen, wobei das Steuergehäuse 7 infolge der Druckdifferenz zwischen der Arbeitskammer 3 und der Unterdruckkammer 4 nach vorne verschoben wird. Der Ventilkolben 10 bleibt zunächst stehen, bis er vom Steuergehäuse 7 über den Querriegel 34 mitgenommen wird. Diese Stellung, in der sich der Ventilkolben 10 in seiner maximal zurückgezogenen Stellung gegenüber dem Steuergehäuse 7 befindet, kann als Nullpunkt des Sensors 30 (Punkt A) festgelegt werden.

In der in Fig. 2 mit Punkt B bezeichneten Bereitschaftsstellung des Bremskraftverstärkers liegen das Steuergehäuse 7 und der Ventilkolben 10 über den Querriegel 34 am Verstärkergehäuse 1 an, während das Verschlußteil 27 des Ventilkolbens an der Übersetzerscheibe 28 anliegt, die ihrerseits sowohl von der Reaktionsscheibe 17 als auch von derRingfläche 29 des Vorderteils 16 beabstandet ist. In dieser Stellung ist der Ventilkolben 10 gegenüber der Stellung von Punkt A ein Stück weiter in das Steuergehäuse 7 eingeschoben bzw. dieses gegenüber dem Ventilkolben 10 durch die Druckfeder 19 zurückgeschoben.

Wird in der Bereitschaftsstellung des Bremskraftverstärkers das Bremspedal vom Fahrer betätigt, wird die Betätigungsstange 5 und der Ventilkolben 10 je nach Betätigungsgeschwindigkeit weiter in das Steuergehäuse 7 eingeschoben, wodurch die Relativverschiebung vergrößert wird. Dies ist in Fig. 2 durch den Anstieg der Kurve gezeigt.

Wenn die erfaßte Relativverschiebung im Punkt C einen mit SW-1 gekennzeichneten oberen Schwellenwert übersteigt, wird der Elektromagnet 22 zur Aktivierung des Bremsassistenten bestromt und die volle Servokraft des Bremskraftverstärkers eingeleitet. Da in diesem Zustand die Fahrerfußkraft nicht mehr proportional zur Ausgangskraft des Bremskraftverstärkers ist, wird der Ventilkolben 10 über die Reaktionsscheibe 17 und die Übersetzerscheibe 28 zurückgeschoben, bis die Übersetzerscheibe 28 an der Ringfläche 29 des Steuergehäusevorderteils 16 anschlägt. Durch das Zurückbewegen des Ventilkolbens 10 gegenüber dem Steuergehäuse 7 wird auch die Relativverschiebung wieder bis zu einem Punkt D verringert. Dieser Punkt liegt konstruktionsbedingt immer zwischen dem Punkt A und dem Punkt B. Der Abstand zwischen Punkt B und Punkt D ist geometrisch durch den Abstand der Rückseite der Übersetzerscheibe 28 von der Ringfläche 29 des Steuergehäusevorderteils 16 während der Bereitschaftsstellung des Bremskraftverstärkers bestimmt.

Wird nach einer Aktivierung des Bremsassistenten der Punkt D durch Zurücknahme des Bremspedals in Richtung A überfahren, bedeutet dies, daß der Fahrer die Bremsung abbrechen will und der Magnet wird bei Unterschreiten eines in Fig. 2 mit SW-2 bezeichneten unteren Schwellenwerts der Relativverschiebung abgeschaltet. Der Magnetstrom kann entweder sprungartig abgeschaltet oder in Abhängigkeit von der durch den Sensor erfaßten Relativverschiebung gesteuert werden. Durch eine zum Sensorsignal proportionale Steuerung des Magnetstromes kann der Fahrer den Bremsdruck dosiert abbauen und auch wieder erhöhen, ohne daß der Bremsassistentenmodus vollständig abgeschaltet wird. Dadurch wird eine nahezu kraftunabhängige Drucksteuerung im Bremsassistenten-Modus ermöglicht. Durch Zurücknahme des Bremspedals im Bremsassistentenmodus kann der Fahrer z.B. den Bremsdruck dosiert abbauen, ohne die Bremsassistentenfuntion schlagartig zu unterbrechen. Will der Fahrer im Bremsassistentenmodus den zuvor reduziertem Bremsdruck wieder erhöhen, so steigert er die Fußkraft, bis der Fußkraftanteil analog der konventionellen Bremskraftverstärkerfunktion proportional zum Druck des Hauptzylinders ist, wodurch ein sanfter Übergang zur regulären Bremsfunktion erreicht wird. Gelangt der Fahrer im Bremsassistentenmodus mit zuvor reduziertem Bremsdruck erneut in eine Paniksituation, so wird der Elektromagnet nach Überschreiten der Zuschaltschwelle wieder mit der vollen Einschaltstromstärke bestromt, wodurch erneut die volle Verstärkung zur Verfügung gestellt wird.

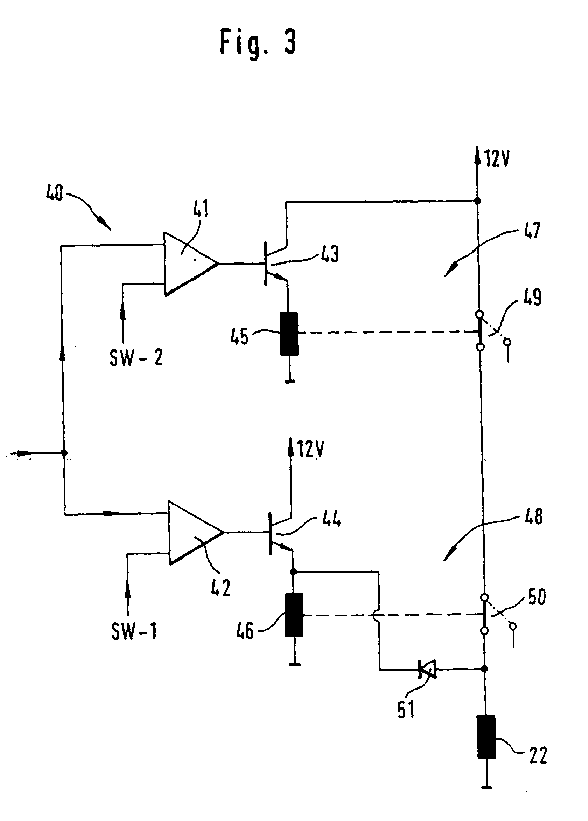

In Fig. 3 ist ein Schaltbild einer einfachen elektrischen Schaltung 40 zur Ansteuerung des erfindungsgemäßen Bremskraftverstärkers gezeigt. Die Schaltung weist zwei Komparatoren 41 und 42 auf. An einen der Eingänge der beiden Komparatoren 41 und 42 ist jeweils das Signal des die Relativveschiebung zwischen dem Steuergehäuse 7 und dem Ventilkolben 10 erfassenden Sensors 30 angelegt. An den Vergleichs-eingang des ersten Komparators 41 ist ein der Abschaltschwelle SW-2 in Fig. 2 entsprechendes Signal und an den Vergleichseingang des zweiten Komparators 42 ein der Zuschaltschwelle SW-1 entsprechendes Signal angelegt. Beide Komparatoren 41 und 42 steuern jeweils über einen Transistor 43 und 44 eine Magnetspule 45 und 46 eines Relais 47 bzw. 48 an. Die Schalter 49 und 50 der Relais 47 bzw. 48 sind in Reihe mit dem Elektromagneten 22 geschaltet. An der Verbindungsleitung zwischen dem Schalter 50 und dem Elektromagneten 22 zweigt eine zur Eingangsseite der Magnetspule 46 führende elektrische Verbindung ab, in der eine Diode 51 angeordnet ist. während der Bereitschaftsstellung des Bremskraftverstärkers ist das Signal des Wegsensors 30 grundsätzlich größer als die Abschaltschwelle SW-2, so daß der Komparator 41 den Transistor 43 durchschaltet und der Schalter 49 geschlossen ist. Wird bei einer schnellen Bremsbetätigung die Zuschaltschwelle SW-1 erreicht, so schaltet der Komparator 42, wodurch der Transistor 44 durchgeschaltet und auch der Schalter 50 geschlossen wird. Da nun beide Schalter 49 und 50 geschlossen sind, wird der Elektromagnet 22 mit Strom versorgt. Selbst wenn das Signal am Komparator 42 unter die Zuschaltschwelle SW-1 fallen sollte, bleibt der Schalter 50 geschlossen, da die Magnetspule 46 über die Diode 51 weiterhin mit Strom versorgt wird. Erst wenn das Signal des Sensors 30 unter die Abschaltschschwelle SW-2 fällt, wird durch das Relais 47 die Stromzufuhr zum Relais 48 unterbrochen. Hierdurch wird die Bestromung des Elektromagneten 22 unterbrochen und der Bremsassistenten-Modus deaktiviert. Zur erneuten Aktivierung des Bremsassistenten-Modus muß das Signal des Sensors 30 wieder den wert der Zuschaltschwelle SW-1 annehmen.

Der erfindungsgemäße Bremskraftverstärker kann somit mit einer sehr einfach aufgebauten elektrischen Schaltung zur Aktivierung und Deaktivierung des Bremsassisten angesteuert werden. Eine derartige Schaltung benötigt kein zusätzliches Steuergerät und kann unmittelbar am Bremskraftverstärker vorgehenen bzw. in diesen integriert sein. Durch eine Erweiterung der elektronischen Schaltung mit einem einfachen Proportional-baustein im Bereich der Lösefunktion kann der bei herkömmlichen Bremskraftverstärkern kritisierte schlagartige Austritt aus der Bremsassistentenfunktion vermieden und für den Fahrer weitgehend unbemerkbar gemacht werden.

## Patentansprüche

1. Bremskraftverstärker für Kraftfahrzeuge mit einem Verstärkergehäuse (1), dessen Innenraum durch eine bewegliche Wand (2) in eine Arbeitskammer (3) und eine Unterdruckkammer (4) unterteilt ist, und einem die bewegliche Wand (2) tragenden Steuergehäuse (7), in dem ein sowohl durch eine Betätigungsstange (5) mittels eines Ventilkolbens (10) als auch durch einen Elektromagneten (22) betätigbares Steuerventil (6) zur Steuerung einer auf die bewegliche Wand (2) einwirkenden Druckdifferenz angeordnet ist, wobei ein Sensor vorhanden ist, der zur Ansteuerung des Electromagneten verwendet wird, **dadurch gekennzeichnet, daß** der Sensor (30) die Relativverschiebung zwischen dem Ventilkolben (10) und dem Steuergehäuse (7) erfaßt und in Abhängigkeit davon der Elektromagnet (22) aktiviert und gesteuert wird.

2. Bremskraftverstärker nach Anspruch 1, **dadurch gekennzeichnet, daß** der Elektromagnet (22) bei Überschreiten einer vorgegebenen ersten Relativverschiebung aktivierbar ist.

3. Bremskraftverstärker nach Anspruch 1 oder 2, **dadurch gekennzeichnet, daß** der Elektromagnet (22) bei Unterschreiten einer vorgegebenen zweiten Relativverschiebung deaktivierbar ist.

4. Bremskraftverstärker nach Anspruch 2 oder 3, **dadurch gekennzeichnet, daß** der Ansteuerstrom des Elektromagneten (22) im aktivierten Zustand in Abhängigkeit von der durch den Sensor (30) erfaßten Relativverschiebung oder einem Relativverschiebungsgradienten veränderbar ist.

5. Bremskraftverstärker nach einem der Ansprüche 2 bis 4, **dadurch gekennzeichnet, daß** die zur Aktivierung des Elektromagneten (22) vorgegebene erste Relativverschiebung in Abhängigkeit von der Fahrzeugverzögerung und/oder der Fahrzeuggeschwindigkeit und/oder des Bremsdrucks und/oder der Zeit, die nach dem Zeitpunkt der Pedalbetätigung vergangen ist, veränderbar ist.

6. Bremskraftverstärker nach einem der vorhergehenden Ansprüche, **dadurch gekennzeichnet, daß** der Sensor (30) ein berührungsloser Wegsensor ist.

7. Bremskraftverstärker nach einem der vorhergehenden Ansprüche, **dadurch gekennzeichnet, daß** der Sensor (30) ein erstes Sensorelement (31) an einem mit dem Ventilkolben (10) fest verbundenen Führungsteil (24) sowie ein zweites Sensorelement (32) an einem mit dem Steuergehäuse (7) verbundenen Teil (33) enthält.

8. Bremskraftverstärker nach einem der vorhergehenden Ansprüche, **dadurch gekennzeichnet, daß** der Sensor (30) ein Hallsensor ist.

9. Bremskraftverstärker nach einem der vorhergehenden Ansprüche, **dadurch gekennzeichnet, daß** eine elektronische Ansteuereinrichtung (40) vorgesehen ist, die nach Maßgabe der Ausgangssignale des Sensors (22) den Elektromagneten (30) ansteuert.

10. Bremskraftverstärker nach einem der vorhergehenden Ansprüche, **dadurch gekennzeichnet, daß** die elektronische Ansteuereinrichtung (40) zwei Komparatoren (41,42) enthält, wobei an einen der Eingänge der beiden Komparatoren (41,42) jeweils das Signal des Sensors (22) und an den Vergleichseingang eines der beiden Komparatoren (41) ein Signal angelegt ist, das einer Abschaltschwelle (SW-2) entspricht, und an den Vergleichseingang des anderen Komparators (42) ein Signal angelegt ist, das einer Zuschaltschwelle (SW-1) entspricht.

11. Bremskraftverstärker nach Anspruch 10, **dadurch gekennzeichnet, daß** die beiden Komparatoren (41,42) jeweils über einen Transistor (43,44) ein Relais (47,48) ansteuern, wobei die Relais (47,48) in Reihe zum Elektromagneten (22) geschaltet sind.

12. Bremskraftverstärker nach Anspruch 11, **dadurch gekennzeichnet, daß** an einer Verbindungsleitung zwischen dem Schalter (50) des Relais (48) und dem Elekromagneten (22) eine zur Eingangseite der Magnetspule (46) des Relais (48) führende Verbindungsleitung anzeigt, in der eine Diode (51) angeordnet ist.

13. Verfahren zur Ansteuerung eines Bremskraftverstärkers nach einem der Ansprüche 1 bis 12, **dadurch gekennzeichnet, daß** der Elektromagnet (22) aktiviert wird, wenn das Signal des Sensors (30) gleich oder größer als eine Zuschaltschwelle (SW-1) ist und daß der Elektromagnet (22) deaktiviert wird, wenn das Signal des Sensors (30) kleiner als eine Abschaltschwelle (SW-2) ist, wobei die Abschaltschwelle kleiner als die Zuschaltschwelle ist.

14. Verfahren nach Anspruch 13, **dadurch gekennzeichnet, daß** der Ansteuerstrom des Elektromagneten (22) im aktivierten Zustand in Abhängigkeit von der durch den Sensor (30) erfaßten Relativverschiebung oder einem Relativverschiebungsgradienten gesteuert wird.

## Claims

1. Brake force booster for automotive vehicles which includes a booster housing (1) whose interior space is subdivided by a movable wall (2) into a working chamber (3) and a vacuum chamber (4), and a control housing (7) which carries the movable wall (2) and accommodates a control valve (6) for controlling a pressure differential that acts upon the movable wall (2), the said control valve being operable by an operating rod (5) by way of a valve piston (10) and by an electromagnet (22), wherein a sensor is provided and used to actuate the electromagnet,
**characterized in that** the sensor (30) detects the relative displacement between the valve piston (10) and the control housing (7), and the electromagnet (22) is activated and controlled in dependence thereon.

2. Brake force booster as claimed in claim 1,
**characterized in that** the electromagnet (22) is adapted to be activated when a predetermined first relative displacement is exceeded.

3. Brake force booster as claimed in claim 1 or 2,
**characterized in that** the electromagnet (22) is adapted to be deactivated when the amount of displacement falls below a predetermined second relative displacement.

4. Brake force booster as claimed in claim 2 or claim 3,
**characterized in that** the actuating current of the electromagnet (22) in the activated condition is variable in response to the relative displacement detected by the sensor (30) or a relative displacement gradient.

5. Brake force booster as claimed in any one of claims 2 to 4,
**characterized in that** the first relative displacement predetermined for the activation of the electromagnet (22) is variable in dependence on the vehicle deceleration, and/or the vehicle speed, and/or the braking pressure, and/or the time which has passed after the moment of pedal application.

6. Brake force booster as claimed in any one of the preceding claims,
**characterized in that** the sensor (30) is a non-contact sensor.

7. Brake force booster as claimed in any one of the preceding claims,
**characterized in that** the sensor (30) comprises a first sensor element (31) on a guide member (31) rigidly connected to the valve piston (10) and a second sensor element (32) on a part (33) connected to the control housing (7).

8. Brake force booster as claimed in any one of the preceding claims,
**characterized in that** the sensor (30) is a Hall sensor.

9. Brake force booster as claimed in any one of the preceding claims,
**characterized in that** there is provision of an electronic actuating device (40) which actuates the electromagnet (30) according to the output signals of the sensor (22).

10. Brake force booster as claimed in any one of the preceding claims,
**characterized in that** the electronic actuating device (40) comprises two comparators (41, 42), and the signal of sensor (22) is applied respectively to one of the inputs of the two comparators (41, 42), and a signal is applied to the comparison input of one of the two comparators (41) which corresponds to a disconnecting threshold (SW-2), and a signal is applied to the comparison input of the other comparator (42) which corresponds to a connecting threshold (SW-1).

11. Brake force booster as claimed in claim 10,
**characterized in that** the two comparators (41, 42) respectively actuate a relay (47, 48) by way of a transistor (43, 44), with the relays (47, 48) being connected in series to the electromagnet (22).

12. Brake force booster as claimed in claim 11,
**characterized in that** a connecting line which leads to the inlet side of the magnetic coil (46) of the relay (48) and in which a diode (51) is provided is arranged at a connecting line between the switch (50) of the relay (48) and the electromagnet (22).

13. Method for actuating a brake force booster as claimed in any one of claims 1 to 12,
**characterized in that** the electromagnet (22) is activated when the signal of the sensor (30) is equal to, or in excess of, a connecting threshold (SW-1), and **in that** the electromagnet (22) is deactivated when the signal of the sensor (30) is lower than a disconnecting threshold (SW-2), with the disconnecting threshold being lower than the connecting threshold.

14. Method as claimed in claim 13,
**characterized in that** the actuating current of the electromagnet (22) in the activated condition is controlled in dependence on the relative displacement detected by the sensor (30) or a relative displacement gradient.

## Revendications

1. Servofrein pour véhicule automobile comportant un boîtier (1) du servofrein dont le volume intérieur est divisé par une paroi mobile (2) en une chambre de travail (3) et une chambre à dépression (4), et comportant un boîtier de commande (7) portant la paroi mobile (2), dans lequel est disposée une soupape de commande (6) qui peut être actionnée par une tige d'actionnement (5) par un piston de soupape (10) comme par un électro-aimant (22), pour la commande d'une pression différentielle agissant sur la paroi mobile (2), un capteur étant prévu pour la commande de l'électro-aimant, **caractérisé en ce que** le capteur (30) détecte le coulissement relatif entre le piston (10) de la soupape et le boîtier de commande (7) et active et commande l'électro-aimant (22) en fonction de ce coulissement.

2. Servofrein selon la revendication 1, **caractérisé en ce que** l'électro-aimant (22) peut être activé en cas de dépassement d'un premier coulissement relatif prescrit.

3. Servofrein selon la revendication 1 ou 2, **caractérisé en ce que** l'électro-aimant (22) peut être désactivé en cas de sous-dépassement d'un deuxième coulissement relatif prescrit.

4. Servofrein selon la revendication 2 ou 3, **caractérisé en ce que** le courant de commande de l'électroaimant (22) à l'état activé peut varier en fonction du coulissement relatif détecté par le capteur (30) ou d'un gradient de coulissement relatif.

5. Servofrein selon l'une des revendications 2 à 4, **caractérisé en ce que** le premier coulissement relatif prescrit pour l'activation de l'électro-aimant (22) peut varier en fonction du ralentissement du véhicule et/ou de la vitesse du véhicule et/ou de la pression de freinage et/ou du temps qui s'est écoulé après l'instant auquel la pédale a été actionnée.

6. Servofrein selon l'une des revendications précédentes, **caractérisé en ce que** le capteur (30) est un capteur de distance sans contact.

7. Servofrein selon l'une des revendications précédentes, **caractérisé en ce que** le capteur (30) contient un premier élément de capteur (31) sur une pièce de guidage (24) solidaire du piston (10) de la soupape ainsi qu'un deuxième élément de capteur (32) sur une pièce (33) reliée au boîtier de commande (7).

8. Servofrein selon l'une des revendications précédentes, **caractérisé en ce que** le capteur (30) est un capteur de Hall.

9. Servofrein selon l'une des revendications précédentes, **caractérisé en ce qu'**il est prévu un dispositif électronique de commande (40) qui commande l'électro-aimant (30) en fonction des signaux de sortie du capteur (22).

10. Servofrein selon l'une des revendications précédentes, **caractérisé en ce que** le dispositif électronique de commande (40) contient deux comparateurs (41, 42), à l'une des entrées de chacun des deux comparateurs (41, 42) étant appliqué le signal du capteur (22) et à l'entrée de comparaison de l'un des deux comparateurs (41) étant appliqué un signal qui correspond à un seuil de mise hors circuit (SW-2) et à l'entrée de comparaison de l'autre comparateur (42) étant appliqué un signal qui correspond à un seuil de mise en circuit (SW-1).

11. Servofrein selon la revendication 10, **caractérisé en ce que** les deux comparateurs (41, 42) commandent chacun un relais (47, 48) par l'intermédiaire d'un transistor (43, 44), les relais (47, 48) étant montés en série avec l'électro-aimant (22).

12. Servofrein selon la revendication 11, **caractérisé en ce que** d'une ligne de liaison entre l'interrupteur (50) du relais (48) et l'électro-aimant (22) part une ligne de liaison menant au côté entrée de la bobine magnétique (46) du relais (48), et dans laquelle est disposée une diode (51).

13. Procédé de commande d'un servofrein selon l'une des revendications 1 à 12, **caractérisé en ce que** l'électro-aimant (22) est activé lorsque le signal du capteur (30) est égal ou supérieur à un seuil de mise en circuit (SW-1) et **en ce que** l'électro-aimant (22) est désactivé lorsque le signal du capteur (30) est inférieur à un seuil de mise hors circuit (SW-2), le seuil de mise hors circuit étant inférieur au seuil de mise en circuit.

14. Procédé selon la revendication 13, **caractérisé en ce que** le courant de commande de l'électro-aimant (22) à l'état activé est commandé en fonction du coulissement relatif détecté par le capteur (30) ou d'un gradient de coulissement relatif.
